## Europäisches Patentamt
## European Patent Office
## Office européen des brevets

(19)

(11) Veröffentlichungsnummer: **0 025 095**
**B1**

(12) **EUROPÄISCHE PATENTSCHRIFT**

(45) Veröffentlichungstag der Patentschrift:
28.09.83

(51) Int. Cl.³: **B 01 D 35/06**

(21) Anmeldenummer: 80103865.4

(22) Anmeldetag: 07.07.80

(54) Vorrichtung zur Hochgradienten-Magnetseparation.

(30) Priorität: 20.07.79 DE 2929468

(43) Veröffentlichungstag der Anmeldung:
18.03.81 Patentblatt 81/11

(45) Bekanntmachung des Hinweises auf die Patenterteilung:
28.09.83 Patentblatt 83/39

(84) Benannte Vertragsstaaten:
BE FR GB

(56) Entgegenhaltungen:
AT-B-220 163
AT-B-323 757
DE-A-2 628 095
DE-A-2 713 294
FR-A-1 433 005
FR-A-2 006 779
Patents Abstracts of Japan Band 4, Nr. 30, 15.
März 1980, Seite 76C2
Patents Abstracts of Japan Band 4, Nr. 9, 23.
Januar 1980, Seite 140M89

(73) Patentinhaber: SIEMENS AKTIENGESELLSCHAFT,
Berlin und München Wittelsbacherplatz 2,
D-8000 München 2 (DE)

(72) Erfinder: Pfister, Hans, Dr., Rudelsweiher Strasse 16,
D-8520 Erlangen (DE)
Erfinder: Rupp, Günter, Dr., Weiherackerweg 24,
D-8521 Marloffstein (DE)

## Vorrichtung zur Hochgradienten-Magnetseparation

Die Erfindung bezieht sich auf eine Vorrichtung zur Hochgradienten-Magnetseparation von magnetisierbaren Teilchen aus einem strömenden Medium mit einer geordneten Filterstruktur, die zwischen den Enden zweier Polschuhe einer Magneteinrichtung in einem im wesentlichen parallel oder antiparallel zur Flußrichtung des Mediums gerichteten Magnetfeld vorbestimmter Magnetfeldstärke Teile mit einer Dicke unter 100 µm aus magnetischem Material vorbestimmter Koerzitivfeldstärke $H_c$ enthält, welche zumindest annähernd senkrecht bezüglich der Richtung des Magnetfeldes angeordnet sind. Eine solche Vorrichtung zur magnetischen Separation ist aus der DE-A-2 628 095 bekannt.

Bei magnetischen Abscheideverfahren wird die Tatsache ausgenutzt, daß in einem ausreichend starken Magnetfeld ein magnetisierbares Teilchen eine Kraft erfährt, die es gegen andere an ihm angreifende Kräfte wie beispielsweise die Schwerkraft oder gegen in einem flüssigen Medium auftretende hydrodynamische Reibungskräfte bewegt bzw. festhält. Solche Abscheideverfahren können beispielsweise für Dampf- oder Kühlwasserkreisläufe in konventionellen wie auch in nuklearen Kraftwerken vorgesehen werden. In dem flüssigen oder gasförmigen Medium dieser Kreisläufe sind Teilchen suspendiert, die im allgemeinen durch Korrosion entstanden sind. Diese Teilchen sind teils ferromagnetisch, wie beispielsweise Magnetit ($Fe_3O_4$), teils antiferromagnetisch, wie beispielsweise Hämatit ($\alpha$-$Fe_2O_3$), oder paramagnetisch, wie z. B. Kupferoxid (CuO). Die Magnetisierbarkeit dieser Teilchen, die darüber hinaus im allgemeinen in verschiedener Größe auftreten, ist somit verschieden stark.

Es sind Verfahren und Vorrichtungen bekannt, mit denen auch kleinste, schwach magnetische Teilchen mit Durchmessern im Mikrometer-Bereich mit einem größeren Abscheidegrad auf magnetische Weise aus einem strömenden Medium herausgefiltert werden können. Bei diesen Verfahren wird mit hohen Magnetfeldern und insbesondere mit sehr hohen Feldgradienten gearbeitet. Man spricht deshalb auch von der Hochgradienten-Magnetseparation. Dabei wurde bisher allgemein davon ausgegangen, daß bei solchen Vorrichtungen zur Hochgradienten-Magnetseparation die erforderlichen hohen Feldgradienten praktisch nur mit Filamenten aus ferromagnetischen Materialien zu erzeugen sind (vgl. »TEEE Transactions on Magnetics«, Vol. MAG-9, No. 3, September 1973, Seiten 303 bis 306). Diese für derartige Vorrichtungen geeigneten Materialien haben im allgemeinen eine verhältnismäßig hohe Koerzitivfeldstärke $H_c$, die z. B. für Chromstahllegierungen zum Teil wesentlich über 1000 A/m liegen kann (vgl. zum Beispiel E. Houdremont: »Handbuch der Sonderstahlkunde«, 3. Auflage, 1956, Springer-Verlag Berlin/Verlag Stahleisen Düsseldorf, 1. Band, Seite 734).

Auch bei der aus der genannten DE-A-2 628 095 bekannten Vorrichtung handelt es sich um eine entsprechende Vorrichtung zur Hochgradienten-Magnetseparation. Sie enthält eine geordnete Filterstruktur aus einer Vielzahl von eng hintereinander zu einem Stapel angeordneten Drahtnetzen, die senkrecht zur Flußrichtung des Mediums in einem verhältnismäßig starken Magnetfeld angeordnet sind, das parallel oder antiparallel zur Richtung des Mediums im Bereich der Filterstruktur gerichtet ist und dort beispielsweise eine magnetische Flußdichte von mindestens 0,7 Tesla hervorruft. Die Drähte bestehen aus einem nichtkorrodierenden, ferromagnetischen Material, wie z. B. Edelstahl, und ihre Stärke ist sehr klein und liegt beispielsweise unter 0,1 mm. Die Drähte sind bis zu ihrer Sättigung magnetisiert, und die an ihnen erzeugten Flußdichtegradienten, die z. B. $10^3$ Tesla/cm betragen können, sind dann ausreichend groß, um auch schwach magnetisierbare Teilchen aus dem strömenden Medium mit verhältnismäßig großem Abscheidegrad herausfiltern zu können.

Bei solchen Vorrichtungen zur Hochgradienten-Magnetseparation sind im allgemeinen zur Magnetisierung der Drähte und somit zur Erzeugung der hohen Flußdichtegradienten starke Elektromagnete wegen des verhältnismäßig großen Entmagnetisierungsfaktors der Drähte von beispielsweise 0,5 erforderlich. Für die Wicklungen dieser Magnete ist dann aber entsprechend viel Leitermaterial, beispielsweise aus Kupfer, und im allgemeinen auch viel ferromagnetisches Material in Form von Jochen und Polschuhen zur Führung des magnetischen Flusses vorzusehen. Diese Magneteinrichtungen sind somit entsprechend aufwendig und weisen außerdem im allgemeinen einen hohen Energieverbrauch auf. Die Investitions- und Betriebskosten einer solchen Vorrichtung der Hochgradienten-Magnetseparation sind also verhältnismäßig groß.

Aufgabe der vorliegenden Erfindung ist es, die eingangs genannte Vorrichtung dahingehend zu verbessern, daß die Kosten zur Erstellung sowie zum Betrieb ihrer Magneteinrichtung gegenüber den bekannten Abscheidevorrichtungen vermindert sind.

Diese Aufgabe wird erfindungsgemäß dadurch gelöst, daß die Filterstruktur flache metallische, glasartige Bänder aus einer weichmagnetischen, amorphen Legierung mit einer Koerzitivfeldstärke $H_c$ und 16 A/m enthält, die so angeordnet sind, daß neben ihren Achsen auch die Normalen ihrer Flachseiten zumindest annähernd senkrecht bezüglich der Richtung des Magnetfeldes gerichtet sind.

Zwar war es bereits aus der AT-B-323 757 allgemein bekannt, Bänder oder Streifen bei einem Magnetfilter zu verwenden. Die Bänder dieses Magnetfilters bestehen jedoch aus ferromagnetischem Material. Außerdem handelt es sich bei dem Magnetfilter um keine Vorrichtung der Hochgradienten-Magnetseparation.

Die Herstellung und Eigenschaften von Bändern aus weichmagnetischen Materialien sind an sich bekannt (vgl. zum Beispiel »Physics Today«, Mai 1975, Seiten 46 bis 53; »Applied Physics Letters«, Vol. 26, Nr. 3, Februar 1975, Seiten 128 bis 130; »Journal of Applied Physics«, Vol. 46, Nr. 4, April 1975, Seiten 1625 bis 1633, und »IEEE Transactions on Magnetics«, Vol. MAG-12, No. 6, November 1976, Seiten 924 bis 926). Bei diesen bekannten Materialien handelt es sich im allgemeinen um amorphe Legierungen. Aus ihnen lassen sich Bänder, die auch als metallische Gläser bezeichnet werden, mit Dicken bis unter 50 µm herstellen. Solche metallischen Gläser werden durch extrem schnelle Abkühlung unter Umgehung der Kristallisation direkt aus der Schmelze erzeugt. Einige Legierungen weisen u. a. eine hohe mechanische Festigkeit auf. Es ist deshalb vorgeschlagen worden, sie zur mechanischen Verstärkung, z. B. als Verbundwerkstoff, einzusetzen. Ferner ist bekannt, daß diese Materialien auch besondere magnetische Eigenschaften, wie z. B. eine sehr kleine Koerzitivfeldstärke, haben können. Als entsprechende Anwendungsgebiete wurden bisher insbesondere Transformatoren, magnetische Verstärker oder Köpfe in Tonbandmaschinen gesehen (vgl. die genannte Literaturstelle »Physics Today«, Seiten 52 und 53).

Es wurde nun erkannt, daß Bänder aus diesen Materialien besonders vorteilhaft auch für eine Vorrichtung der Hochgradienten-Magnetseparation vorgesehen werden können. Mit der besonderen Ausrichtung dieser Bänder in die Filterstruktur können dann an deren Längskanten vorteilhaft entsprechend hohe Flußdichte-Gradienten erhalten werden. Außerdem ist zur Magnetisierung dieser Bänder aufgrund der geringen Koerzitivfeldstärke nur eine sehr geringe magnetische Feldstärke in der Filterstruktur erforderlich. Die damit verbundenen Vorteile bestehen dann darin, daß die Magneteinrichtungen zur Erzeugung dieser Feldstärke dementsprechend klein und somit kostengünstig sein können.

Die Vorrichtung zur Hochgradienten-Magnetseparation nach der Erfindung kann vorteilhaft spiralförmig um eine zur Magnetfeldrichtung parallele Achse aufgerollte Bänder enthalten. Außerdem kann vorteilhaft die erfindungsgemäß gestaltete Vorrichtung mehrere in Magnetfeldrichtung gesehen hintereinander angeordnete und/oder auch senkrecht dazu nebeneinander angeordnete Bänder aufweisen. Ihre Filterstrukturen lassen sich so verhältnismäßig einfach und kostengünstig herstellen.

Außerdem können vorteilhaft die ausgerichteten Bänder aus dem weichmagnetischen Material mit weiteren, parallel oder schräg bezüglich der Magnetfeldrichtung angeordneten Bändern, die vorzugsweise aus nichtmagnetischem Material bestehen, mindestens ein Gewebe bilden oder können auch die ausgerichteten Bänder auf mindestens einer Trägerfolie aus nichtmagnetischem Material aufgebracht sein. Hierdurch läßt sich eine ausreichende mechanische Stabilität von Bändern mit extrem kleiner Dicke gewährleisten.

Weitere vorteilhafte Ausgestaltungen der Vorrichtung nach der Erfindung sind in den restlichen abhängigen Ansprüchen gekennzeichnet.

Die Erfindung wird nachstehend anhand der Zeichnung noch weiter erläutert. Dabei zeigt

Fig. 1 schematisch eine Filterstruktur einer Vorrichtung nach der Erfindung; in den

Fig. 2 bis 5 sind weitere, für eine solche Vorrichtung geeignete Filterstrukturen schematisch veranschaulicht.

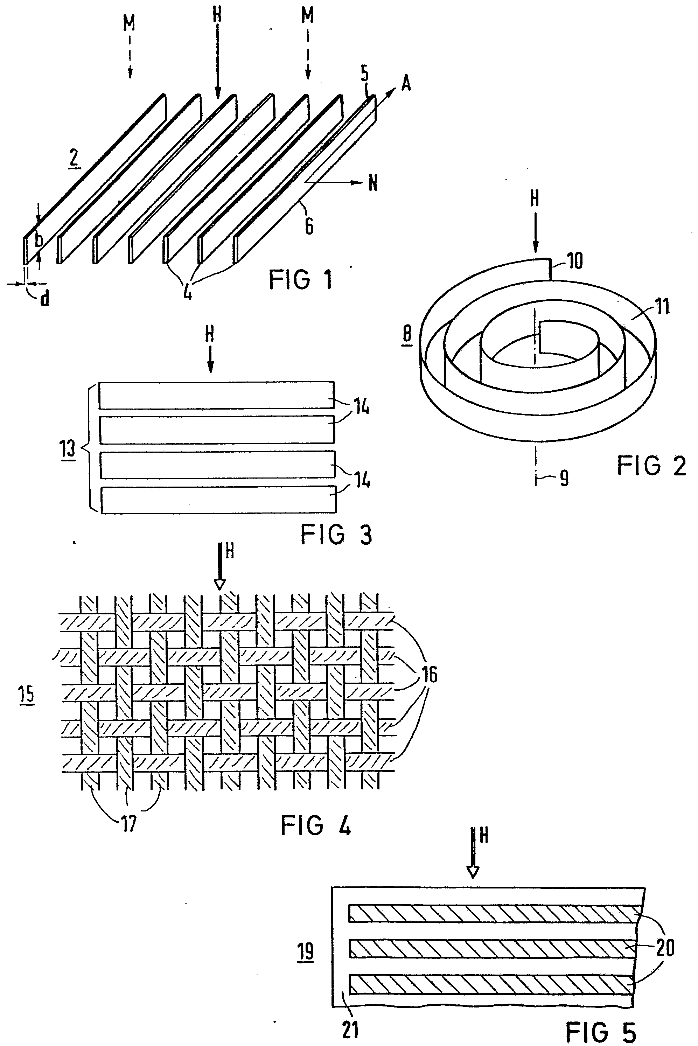

Die in Fig. 1 in Schrägansicht dargestellte Filterstruktur ist für eine Vorrichtung der Hochgradienten-Magnetseparation vorgesehen. Mit dieser Vorrichtung sollen kleinste magnetisierbare Teilchen, beispielsweise ferromagnetische Teilchen mit Teilchengrößen unter 1 µm, oder auch schwach magnetische, beispielsweise paramagnetische oder antiferromagnetische Teilchen mit verhältnismäßig hohem Abscheidegrad aus einem strömenden Medium herausgefiltert werden. In der Figur nicht näher ausgeführte Bauteile dieser Abscheidevorrichtung können z. B. entsprechende Bauteile der aus der DE-OS 2 628 095 bekannten Abscheidevorrichtung sein.

Die allgemein mit 2 bezeichnete Filterstruktur ist in dem Zwischenraum zwischen den Enden zweier in der Figur nicht dargestellter Polschuhe einer Magneteinrichtung, beispielsweise eines Elektromagneten, angeordnet, so daß in ihr ein Magnetfeld H zu erzeugen ist. Parallel oder auch antiparallel zur Richtung des Magnetfeldes H bzw. der mit ihm verbundenen magnetischen Induktion soll ein Medium M, in dem die in der Filterstruktur abzuscheidenden Teilchen suspendiert sind, durch die Filterstruktur hindurchgeleitet werden. Die Flußrichtung des Mediums ist durch einzelne gestrichelte Pfeile angedeutet.

Die Filterstruktur 2 enthält mehrere parallel nebeneinander angeordnete Bänder 4, von denen der Übersichtlichkeit wegen in der Figur nur sieben Bänder angedeutet sind. Die Anzahl dieser Bänder ist im allgemeinen wesentlich höher und beträgt beispielsweise 50. Außerdem ist der Abstand benachbarter Bänder wesentlich geringer und liegt beispielsweise unter 1 mm. Die Bänder sind in einer in der Figur nicht dargestellten Haltevorrichtung befestigt und so angeordnet, daß ihre Längsachsen A und die Normalen N auf ihren Flachseiten zumindest annähernd senkrecht zur Richtung des Magnetfeldes H und zur Flußrichtung des Mediums M gerichtet sind.

Gemäß der Erfindung bestehen diese Bänder aus einem Material mit einer Koerzitivfeldstärke $H_c$ unter 0,2 Oe (16 A/m). Entsprechende weichmagnetische amorphe Legierungen, die auch als metallische Gläser bezeichnet werden, sind an sich bekannt. Aus diesen Materialien lassen sich Bänder mit sehr geringer Dicke herstellen. Erfindungsgemäß soll die Dicke d der Bänder 4 unter 100 µm, vorzugsweise unter 50 µm, beispielsweise bei 20 µm liegen. Ihre Breite b soll vergleichsweise wesentlich größer sein und kann z. B. einige Millimeter betragen. Mit der Wahl eines großen Verhältnisses von Breite b zu Dicke d der Bänder 4 wird vorteilhaft ein entsprechend kleiner Entmagnetisierungsfaktor dieser Bänder erhalten.

Aufgrund der Verwendung solcher Bänder mit sehr kleiner Koerzitivfeldstärke $H_c$ ist nur ein verhältnismäßig schwaches Magnetfeld, beispielsweise von einigen Oersted (1 Oe = 79,6 A/m), erforderlich, um eine Sättigungsmagnetisierung dieser Bänder zu erreichen. Die hierfür erforderliche Magneteinrichtung kann deshalb vorteilhaft entsprechend klein gehalten werden.

Da die Bänder 4 mit extrem geringer Dicke d herzustellen sind und sich so an ihren senkrecht zur Richtung des Magnetfeldes und zur Flußrichtung des Mediums M verlaufenden Längskanten 5 und 6 sehr hohe Flußdichtegradienten erzeugen lassen, können mit der aus ihnen gebildeten Filterstruktur 2 auch schwach magnetisierbare Teilchen mit Teilchengrößen bis unter 1 µm mit einem verhältnismäßig hohen Abscheidegrad herausgefiltert werden.

In Fig. 1 ist zwar nur eine einzige Filterstruktur 2 veranschaulicht. Im allgemeinen wird jedoch eine Vorrichtung zur Hochgradienten-Magnetseparation mit mehreren derartigen Filterstrukturen ausgestattet sein, die in Strömungsrichtung gesehen hintereinander angeordnet sind.

Gemäß der Schrägansicht nach Fig. 2 kann eine Filterstruktur 8 auch aus einem spiralförmig um eine Achse 9 gewickelten Band 10 aus einem vorbestimmten weichmagnetischen Material gebildet werden. Die durch eine gestrichelte Linie 9 dargestellte Achse und die Flachseiten 11 des Bandes sind dabei parallel zur Richtung des Magnetfeldes H angeordnet. In der Figur ist der Übersichtlichkeit wegen nur eine geringe Anzahl von Windungen aus dem Band 10 angedeutet.

Wie aus der Seitenansicht nach Fig. 3 hervorgeht, kann eine Filterstruktur 13 auch mehrere, bezüglich der Richtung des Magnetfeldes H hintereinander zu einem Stapel angeordnete Bandspirale 14 enthalten, die jeweils der Bandspirale 8 nach Fig. 2 entsprechen.

In Fig. 4 ist eine weitere Ausführungsform einer Filterstruktur für eine Abscheidevorrichtung nach der Erfindung in Seitenansicht veranschaulicht. Diese Filterstruktur enthält mindestens ein allgemein mit 15 bezeichnetes Gewebe aus Bändern 16 und 17, wobei die Gewebeebene parallel zur Anströmrichtung des zu filternden Mediums und zur Richtung der magnetischen Feldstärke H liegt. Eine der beiden Bandrichtungen im Gewebe, beispielsweise die Richtung der Bänder 16, muß dabei zumindest annähernd senkrecht zur Richtung des Magnetfeldes H verlaufen, um an den Längskanten dieser Bänder die für den Abscheideprozeß erforderlichen hohen Flußdichtegradienten ausbilden zu können. Die Bänder 16 sind deshalb aus dem vorbestimmten weichmagnetischen Material gemäß der Erfindung hergestellt. Die senkrecht zu ihnen verlaufenden Bänder 17, die somit parallel zur Feldrichtung und Strömungsrichtung weisen, bestehen vorteilhaft aus einem nichtmagnetischen Material, wie z. B. aus Kunststoff, und dienen im wesentlichen nur zur Halterung der Bänder 16. Die Bänder 17 können jedoch auch schräg bezüglich der Magnetfeldrichtung angeordnet sein und gegebenenfalls auch aus dem weichgemachten Material der Bänder 16 bestehen.

Gemäß der Seitenansicht nach Fig. 5 enthält eine Filterstruktur 19 mehrere, bezüglich der Richtung des Magnetfeldes H hintereinander angeordnete Bänder 20 aus dem vorbestimmten weichmagnetischen Material. Diese Bänder sind auf einem Träger 21 aus einem nichtmagnetischen Material, beispielsweise einer Kunststofffolie, aufgebracht, z. B. aufgeklebt. Die Ausrichtung der Bänder 20 bezüglich des Magnetfeldes H entspricht dabei der Ausrichtung der Bänder 16 nach Fig. 4.

Bei den Ausführungsbeispielen von Filterstrukturen gemäß den Fig. 4 und 5 wurde angenommen, daß diese Filterstrukturen mindestens ein ebenes Gewebe mit ausgerichteten Bändern aus dem vorbestimmten weichmagnetischen Material bzw. eine ebene Trägerfolie mit solchen Bändern umfaßt. Eine für die Vorrichtung nach der Erfindung geeignete Filterstruktur kann jedoch ebensogut aus einem solchen Gewebe oder einer solchen Folie bestehen, die jeweils spiralförmig aufgerollt sind. Die Anordnung der Spiralform entspricht dann etwa der Anordnung der Bänder nach Fig. 2. Mehrere dieser spiralförmig aufgerollten Gewebe oder Trägerfolien können auch für eine Filterstruktur gemäß der Ausführungsform nach Fig. 3 gestapelt werden.

In den Fig. 1 bis 5 sind Filterstrukturen mit Bändern veranschaulicht, deren Achsen genau senkrecht bezüglich der Magnetfeld- und Strömungsrichtung weisen. Diese Bänder können jedoch gegebenenfalls auch so angeordnet werden, daß ihre Achsen die Magnetfeldrichtung unter einem Winkel schneiden, der von 90° verschieden ist.

Eine Reinigung der Filterstrukturen in den Vorrichtungen zur Hochgradienten-Magnetseparation nach der Erfindung von den in ihnen abgeschiedenen Teilchen kann in bekannter Weise, z. B. durch mechanisches Ablösen der Teilchen von den Bändern, durch einen Austausch der Bänder bzw. Filterstrukturen oder durch Entmagnetisieren, erfolgen. Aufgrund der niedrigen Koerzitivfeldstärke $H_c$ der Bänder sind vorteilhaft die für eine Entmagnetisierung erforderlichen magnetischen Feldstärken verhältnismäßig gering und die erforderlichen Einrichtungen entsprechend klein.

## Patentansprüche

1. Vorrichtung zur Hochgradienten-Magnetseparation von magnetisierbaren Teilchen aus einem strömenden Medium mit einer geordneten Filterstruktur, die zwischen den Enden zweier Polschuhe einer Magneteinrichtung in einem im wesentlichen parallel oder antiparallel zur Flußrichtung des Mediums gerichteten Magnetfeld vorbestimmter Feldstärke Teile mit einer Dicke unter 100 µm aus magnetischem Material vorbestimmter Koerzitivfeldstärke $H_c$ enthält, welche zumindest annähernd senkrecht bezüglich der Richtung des Magnetfeldes angeordnet sind, dadurch gekennzeichnet, daß die Filterstruktur (2; 8; 13; 15; 19) flache metallische, glasartige Bänder (4; 10; 16; 20) aus einer weichmagnetischen, amorphen Legierung mit einer Koerzitivfeldstärke $H_c$ unter 16 A/m enthält, die so angeordnet sind, daß neben ihren Achsen (A) auch die Normalen (N) ihrer Flachseiten zumindest annähernd senkrecht bezüglich der Richtung des Magnetfeldes (H) gerichtet sind.

2. Vorrichtung nach Anspruch 1, gekennzeichnet durch ausgerichtete Bänder (4; 10; 16; 20) mit einer Dicke (d) unter 50 µm.

3. Vorrichtung nach Anspruch 1 oder 2, gekennzeichnet durch Bänder (4; 10; 16; 20) aus einem Material mit hoher Remanenz.

4. Vorrichtung nach einem der Ansprüche 1 bis 3, gekennzeichnet durch spiralförmig um eine zur Magnetfeldrichtung parallele Achse (9) aufgerollte Bänder (10) (Fig. 2).

5. Vorrichtung nach einem der Ansprüche 1 bis 4, gekennzeichnet durch mehrere in Magnetfeldrichtung gesehen hintereinander angeordnete und/oder senkrecht dazu nebeneinander angeordnete Bänder (Fig. 1 und 3).

6. Vorrichtung nach einem der Ansprüche 1 bis 5, dadurch gekennzeichnet, daß die ausgerichteten Bänder (16) mit weiteren parallel oder schräg bezüglich der Magnetfeldrichtung angeordneten Bändern (17) mindestens ein Gewebe (15) bilden (Fig. 4).

7. Vorrichtung nach Anspruch 6, gekennzeichnet durch ein Gewebe (15), dessen Gewebeebene zumindest annähernd parallel zur Magnetfeldrichtung angeordnet ist.

8. Vorrichtung nach Anspruch 6 oder 7, dadurch gekennzeichnet, daß die parallel oder schräg bezüglich der Magnetfeldrichtung angeordneten Bänder (17) aus nichtmagnetischem Material bestehen.

9. Vorrichtung nach einem der Ansprüche 6 bis 8, gekennzeichnet durch mindestens ein spiralförmig um eine zur Magnetfeldrichtung parallele Achse aufgerolltes Gewebe.

10. Vorrichtung nach einem der Ansprüche 1 bis 9, dadurch gekennzeichnet, daß die Bänder an Trägerelementen aus nichtmagnetischem Material angebracht sind.

11. Vorrichtung nach Anspruch 10, dadurch gekennzeichnet, daß die Bänder (20) auf mindestens einer Trägerfolie (21) aufgebracht sind.

12. Vorrichtung nach Anspruch 11, gekennzeichnet durch mindestens eine spiralförmig um eine zur Magnetfeldrichtung parallele Achse aufgerollte Trägerfolie.

## Claims

1. Apparatus for the high gradient magnetic separation of magnetizable particles from a flowing medium, comprising an ordered filter structure, which between the ends of two pole shoes of a magnetic device and in a magnetic field which has a predetermined field strength and has a direction which is essentially parallel or anti-parallel to the direction of flow of the medium, has components which have a thickness of less than 100 µm and are made of a magnetic material of a predetermined coercive field strength $H_c$, and which are arranged so as to be at least approximately at right angles to the direction of the magnetic field, characterised in that the filter structure (2; 8; 13; 15; 19) comprises flat, metallic, glassy strips (4; 10; 16; 20) made of a softmagnetic amorphous alloy having a coercive field strength $H_c$ of less than 16 A/m, which strips are so arranged that in addition to their longitudinal axes (A), the normals (N) to their flat sides are also so directed as to be at least approximately at right angles to the direction of the magnetic field (H).

2. Apparatus as claimed in Claim 1, characterised by aligned strips (4; 10; 16; 20) having a thickness (d) of less than 50 µm.

3. Apparatus as claimed in Claim 1 or Claim 2, characterised by strips (4; 10; 16; 20) made of a high remanence material.

4. Apparatus as claimed in one of Claims 1 to 3, characterised by strips (10) which are spirally coiled about an axis (9) parallel to the direction of the magnetic field (Fig. 2).

5. Apparatus as claimed in one of Claims 1 to 4, characterised by a plurality of strips which, viewed in the direction of the magnetic field, are arranged consecutively and/or side-by-side at right angles thereto (Figs. 1 and 3).

6. Apparatus as claimed in one of Claims 1 to 5, characterised in that the aligned strips (16), together with further strips (17), which are arranged parallel or obliquely to the direction of the magnetic field, form at least one fabric (15) (Fig. 4).

7. Apparatus as claimed in Claim 6, characterised by a fabric (15) the plane of which is arranged so as to be at least approximately parallel to the direction of the magnetic field.

8. Apparatus as claimed in Claim 6 or Claim 7, characterised in that the strips (17), which are arranged parallel or obliquely to the direction of the magnetic field, consist of a non-magnetic material.

9. Apparatus as claimed in one of Claims 6 to 8, characterised by at least one fabric which is spirally coiled about an axis parallel to the direction of the magnetic field.

10. Apparatus as claimed in one of Claims 1 to 9, characterised in that the strips are secured to carrier elements made of a non-magnetic material.

11. Apparatus as claimed in Claim 10, characterised in that the strips (20) are applied to at least one carrier foil (21).

12. Apparatus as claimed in Claim 11, characterised by at least one carrier foil which is spirally coiled about an axis parallel to the direction of the magnetic field.

**Revendications**

1. Dispositif pour la séparation magnétique à gradient élevé de particules magnétisables à partir d'un milieu qui s'écoule, comportant une structure de filtre ordonnée qui contient, entre les extrémités de deux pièces polaires d'un dispositif à aimants, dans un champ magnétique dirigé sensiblement parallèlement ou anti-parallèlement à la direction de l'écoulement du milieu et ayant une intensité de champ prédéterminée, des parties d'une épaisseur inférieure à 100 μm en un matériau de force coercitive $H_c$, qui sont disposées au moins approximativement perpendiculairement par rapport à la direction du champ magnétique, caractérisé par le fait que la structure de filtre (2; 8; 13; 15; 19) contient des bandes métalliques planes (4; 10; 16; 20) du genre d'un verre, faites avec un alliage amorphe, magnétiquement doux et à force coercitive inférieure à 16 A/m, et disposées de telle manière qu'en plus de leurs axes (A), également les normales (N) à leurs côtés plans sont dirigées à peu près perpendiculairement par rapport à la direction du champ magnétique (H).

2. Dispositif selon la revendication 1, caractérisé par des bandes alignées (4; 10; 16; 20) d'une épaisseur (d) inférieure à 50 μm.

3. Dispositif selon la revendication 1 ou 2, caractérisé par des bandes (4; 10; 16; 20) en un matériau de forte rémanence.

4. Dispositif selon l'une des revendications 1 à 3, caractérisé par des bandes (10) enroulées en forme de spirales autour d'un axe (9) (figure 2) qui est parallèle à la direction du champ magnétique.

5. Dispositif selon l'une des revendications 1 à 4, caractérisé par plusieurs bandes qui, vues dans la direction du champ magnétique, sont disposés les unes derrière les autres et/ou perpendiculairement à celles-ci et disposées les unes à côté des autres (figures 1 et 3).

6. Dispositif selon l'une des revendications 1 à 5, caractérisé par le fait que les bandes alignées (16) forment, avec d'autres bandes (17) disposées parallèlement ou obliquement par rapport à la direction du champ magnétique, au moins un tissu (15).

7. Dispositif selon la revendication 6, caractérisé par un tissu (15) dont le plan du tissu est disposé au moins à peu près parallèlement à la direction du champ magnétique.

8. Dispositif selon la revendication 6 ou 7, caractérisé par le fait que les bandes (17) disposées parallèlement ou obliquement par rapport à la direction du champ magnétique, sont constituées avec un matériau non magnétique.

9. Dispositif selon l'une des revendications 6 à 8, caractérisé par au moins un tissu enroulé en forme de spirale autour d'un axe parallèle à la direction du champ magnétique.

10. Dispositif selon l'une des revendications 1 à 9, caractérisé par le fait que les bandes sont montées sur des éléments de support en un matériau non magnétique.

11. Dispositif selon la revendication 10, caractérisé par le fait que les bandes (20) sont montées au moins sur une feuille de support (21).

12. Dispositif selon la revendication 11, caractérisé par au moins une feuille de support enroulée en forme de spirale autour d'un axe qui est parallèle à la direction du champ magnétique.

FIG 1

FIG 2

FIG 3

FIG 4

FIG 5